# EUROPEAN PATENT SPECIFICATION

(11) **EP 0 641 950 B1**
(45) Date of publication and mention of the grant of the patent: **05.03.1997**
(21) Application number: 94203356.4
(22) Date of filing: 15.04.1991
(51) Int. Cl.: F16D 59/02, B66D 5/14

(54) **Disc brake for elevator**
Scheibenbremse für einen Aufzug
Frein à disque pour un ascenseur

(30) Priority: 13.04.1990 US 508627
(43) Date of publication of application: 08.03.1995
(62) Divisional of application: 91303295.9
(73) Proprietor: OTIS ELEVATOR COMPANY, Farmington, CT 06032 (US)
(72) Inventor: Sheridan, William, Southington, Connecticut 06489 (US)
(74) Representative: Tomlinson, Kerry John

(56) References cited:
- DE-A- 2 646 736
- GB-A- 1 094 752
- GB-A- 1 581 829

## Description

This invention relates to an improved brake assembly for use in holding an elevator car at a landing, which is also operable to stop the car under emergency conditions, as in a power failure or overspeed. More particularly, this invention relates to a caliper brake assembly for engagement with a disk secured to the elevator machine shaft or drive sheave to hold the latter against rotation.

Disk brakes which act upon a disk secured to an elevator machine shaft to hold the elevator car in place at landings are known in the prior art. Disk brakes in the prior art which have been adapted for elevator use have been full plate disk brakes wherein the brake shoes are operable to engage the periphery of the disk to hold the car in place. Full plate disk brakes may be prone to dirt and moisture problems, and are not amenable to solenoid stroke variations due to their mode of operation. They are also noisy due to the difficulty in controlling motion in the relatively short stroke of the flat faced armature.

A disk brake is also known from DE-A-2646736 for use with handling equipment, such as travelling cranes, in which the disk is braked by a pair of opposed pads mounted on sprung levers and actuated by an electromagnet.

This invention relates to a disk brake assembly for use in an elevator system wherein the disk brakes are caliper-type brakes which are operative to engage a brake disk mounted on the machine shaft or drive sheave to hold the car in place at landings. More particularly, the disk brake assembly of this invention comprises:
a) a pair of brake shoes mounted on an associated pair of brake arms, the brake shoes having opposed braking surfaces;
b) a brake disk interposed between the brake shoes, the brake disk having opposite side surfaces facing respective ones of the braking surfaces;
and
c) spring means which act on the brake arms to bias the brake shoes toward each other; characterised in that the assembly further comprises
d) latching means including:
   i) a pair of pivotally mounted levers for engagement with the brake arms to hold the latter against the bias of the spring means; and
   ii) solenoid latch actuating means including a solenoid plunger operably engaging the levers to selectively hold the latter against the brake arms, the plunger being reciprocally movable between latch-on and latch-off positions to selectively latch and release the brake arms.

The association of a latching solenoid and plunger with levers that engage with the brake arms obtains a mechanical advantage whereby smaller solenoids can be used to hold the brake in an "off" condition. Also, the plunger may have a larger stroke which provides the advantage of being able to control the noise of the plunger or core by stepping the solenoid plunger to bias the magnetic flux thus controlling the velocity and force of the plunger. The brake assembly of this invention may be spring-biased "on", so that when power to the solenoid is interrupted, the brake will engage the brake disk by reason of spring action. The spring action may be supplied to the brake shoes by a single spring, or each brake shoe can be biased independently by for example its own individual spring. In the latter case, if one spring fails the other will cause engagement of one brake shoe with the disk which will be enough to hold the elevator at a landing safely. The brake assembly may be modular whereby a number of the assemblies can be ganged on a single disk for heavier duty elevators. The construction of the brake may be such that some of its components and its solenoid can be repaired or cleaned after being detached from the assembly while the brake shoes engage the brake disk.

It is therefore an object of this invention to provide an improved disk brake assembly for use in an elevator system for holding the car in place at landings and for emergency stopping of the car.

These and other objects and advantages of the invention will become more readily apparent from the following detailed description of an exemplary preferred embodiment thereof when taken in conjunction with the accompanying drawings, in which:
FIGURE 1 is a perspective view of two of the brake modules and an associated disk which is keyed to the elevator machine shaft;
FIGURE 2 is an elevational view partially in section showing the disk mounted on the sheave;
FIGURE 3 is a top plan view of one of the brake modules;
FIGURE 4 is a front elevational view of the solenoid operated brake latch portion of the assembly;
FIGURE 5 is a view similar to FIGURE 3 but showing the use of separate actuating springs for each brake arm; and
FIGURE 6 is a fragmented sectional view of the lever-engaging pin on the brake arms.

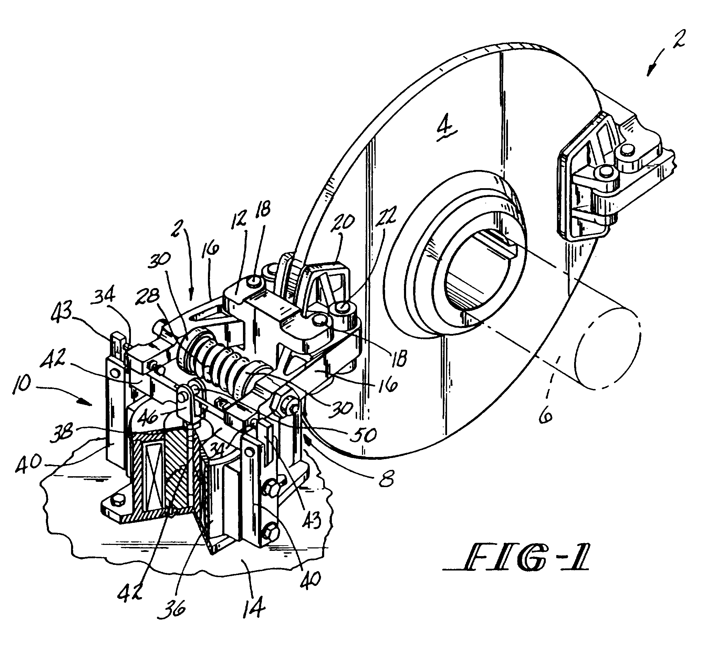

Referring now to FIGURE 1, two identical brake modules 2 are shown operably interacting with a brake disk 4 which is keyed to and rotates with the shaft 6 (shown in phantom) of the elevator machine. Each module 2 includes a brake assembly 8 and a brake latch assembly 10.

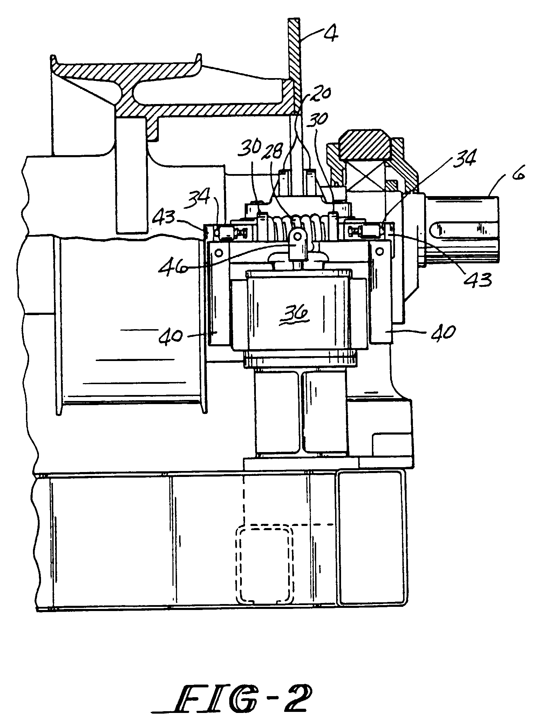

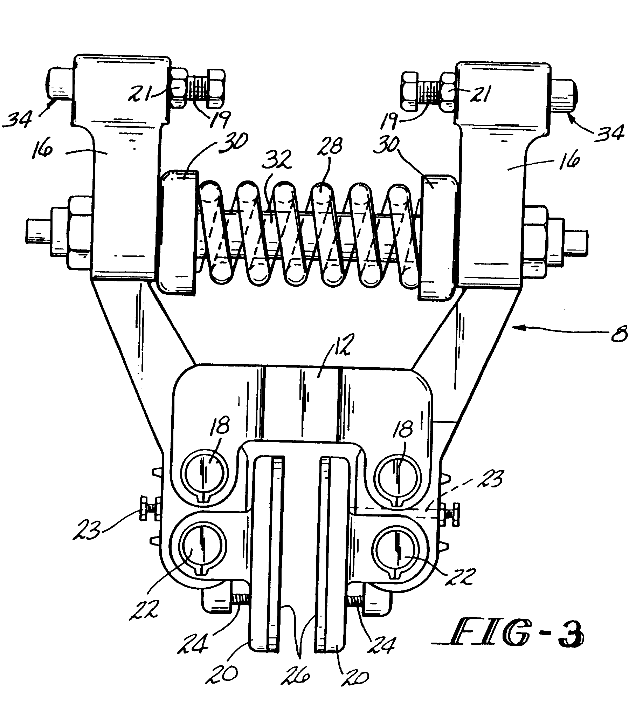

FIGURES 1, 2 and 3 show details of the brake assembly 8. The brake assembly 8 includes a bracket 12 which is fixed to the machine frame or stand 14 (shown in phantom lines in FIGURES 1 and 2) and to which two opposed brake arms 16 are mounted for pivotal movement about pins 18. A brake shoe 20 is pivotally mounted on pins 22 to the brake arms 16 so as to flank the disk 4. A coil spring 24 sandwiched between each brake shoe 20 about its respective brake arm 16 biases each brake shoe 20 about its respective pin 22 and toward the inner end of an adjustable screw 23 threaded into each arm 16, such that the brake pads 26 on the shoes 20 remain parallel to each other and to the disk 4. In this manner the pads 26 are prevented from dragging on the disk 4 when the brake is lifted. A brake actuating spring 28 is mounted in spring caps 30 carried on spring guides 32 which are secured to the brake arms 16. The spring 28 biases the arms 16 outwardly about the pins 18 thereby biasing the brake shoes 20 against the disk 4. This action will occur whenever power is removed from the solenoid 36. In the event of a power failure or an emergency, the brake will automatically sit on the disk. The spring 28 thus supplies the force needed to set the brake. Cam pins 34 are mounted on the ends of the arms 16 distal of the brake shoes 20.

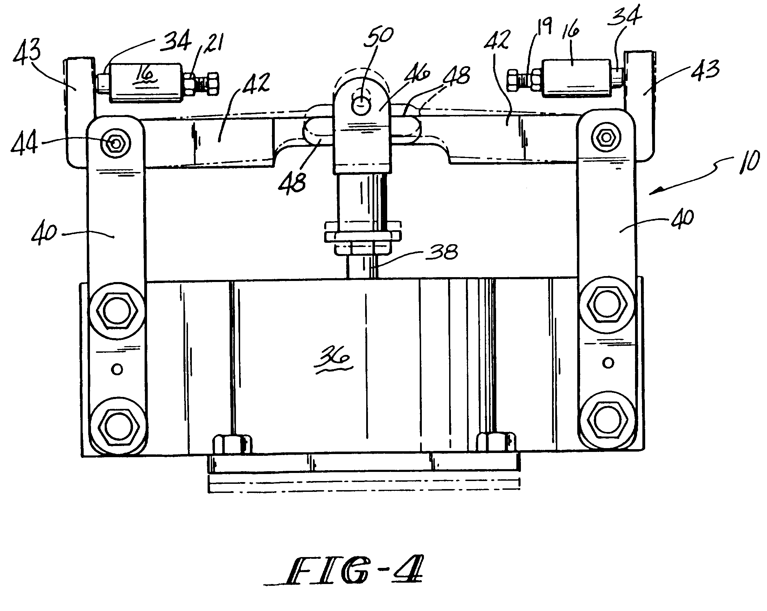

FIGURES 1 and 4 show details of the brake latching assembly 10. The latch 10 includes a solenoid 36 fixed to the machine stand 14 and a solenoid actuated plunger 38 which moves up and down in the solenoid 36. Brackets 40 are mounted on opposite sides of the solenoid 36 and latch levers 42 with upturned fingers 43 are pivotally mounted on the brackets 40 via pins 44. A clevis 46 is disposed on the plunger 38 and receives overlapping ends 48 of the levers 42. A pin 50 spans the clevis 46 and overlies the ends 48 of the levers 42 thereby interconnecting the solenoid plunger 38 and the levers 42. The upturned fingers 43 on the levers 42 engage the cam pins 34 on the brake assembly 8.

It will be appreciated that when the latch levers 42 are disconnected from the mount brackets 40, and released from the clevis 46 by removing pin 50, the core pin 38 can simply be pulled up out of the solenoid core for cleaning or replacement.

When the solenoid 36 is supplied with electricity, the plunger 38 will be recessed in the solenoid 36, and the clevis 46, levers 42 and cam pins 34 will be in the positions shown in solid lines in FIGURE 4. The cam pins 34 will thus be latched causing compression of the brake actuating spring 28 and lifting the brake shoes 20 off the brake disk 4. When the elevator car is properly levelled at a landing, the elevator controller switches off electrical power to the solenoid 36 allowing the plunger 38 and clevis 46 to rise to the position shown in phantom lines in FIGURE 4. This movement causes the levers 42 to pivot about the pins 44 to the respective positions shown in phantom in FIGURE 4 whereby the actuating spring 28 is able to pivot the brake arms 16 about the pins 18 causing the brake shoe pads 26 to engage the disk 4. The enabling of the actuating spring 28 is the result of movement of the lever fingers 43 away from the cam pins 34, as shown in phantom lines in FIGURE 4. The brake will thus be set on the disk 4, and the car held at the landing. When it is desired to move the car away from the landing, the controller switches power back on to the solenoid 36. This causes the plunger 38 to be drawn back into the solenoid 36 to return the clevis 46, levers 42 and cam pins 34 back to the respective positions shown in solid lines in FIGURE 4. Movement of the cam pins 34 causes the brake pads 26 to lift off of the disk 4, and compresses the actuating spring 28.

Referring to FIGURE 6, details of the lever contact pin assembly 34 are shown. At the outer end of the brake arm 16, a threaded bore 17 is formed to receive an adjustment bolt 19 carrying a lock nut 21. The bore 17 opens into a smooth bore 23 in which a pin 25 is slideably disposed. The pin 25 has rounded end walls 27 and 29 for providing point contact between the brake arms and levers and may carry a pair of friction rings 31 to snugly hold the pin 25 in place within the bore 23.

The adjustment bolt 19 allows the pin 25 to move toward and away from finger 43 to thereby allow the positioning of the levers 42 to be modified.

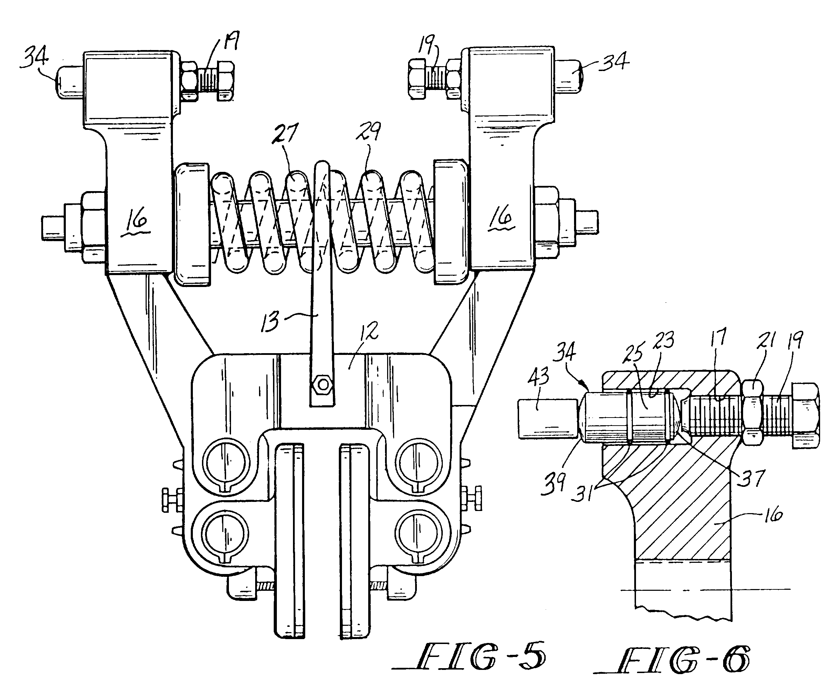

In FIGURE 5 there is shown an alternative embodiment of the invention wherein two actuating springs 27 and 29 are used, one for independently biasing each of the levers 16. Each of the springs 27 and 29 seats on a central plate 13 which is fastened to the bracket 12. By using two separate springs, if one fails, the other one will still be operable to move one of the brake shoes against the disk 4 to provide some braking of the car at the landing. A single spring separated into two independent portions could also be used.

It will be appreciated that the brake assembly of this invention provides several advantages over prior art caliper disk brakes. Biasing the brake shoes on the brake arms ensures that the brake shoes will not drag on the disk when the brakes are applied or lifted, thereby quieting the brake. The use of levers in the latch assembly provides the mechanical advantage sufficient to allow the use of a small latch solenoid having a longer stroke. The longer stroke solenoid allows the use of the stepped core whereby noise may be reduced. The use of two actuating springs on the brake assembly assures that spring failure will not completely prevent the brake from operating. The modular construction of the assembly enables one unit to be used in lighter duty elevators, and multiple units to be used in heavier duty elevators. It also allows repair and cleaning of the latch assembly components while the brake is set.

Since many changes and variations of the disclosed embodiments of the invention may be made without departing from the inventive concept, it is not intended to limit the invention otherwise than as required by the appended claims.

## Claims (Claims for the following Contracting State(s): DE, ES, FR, IT)

1. A caliper brake assembly (8) comprising:
a) a pair of brake shoes (20) mounted on an associated pair of brake arms (16), said brake shoes (20) having opposed braking surfaces (26);
b) a brake disk (4) interposed between said brake shoes (20), said brake disk (4) having opposite side surfaces facing respective ones of said braking surfaces (26);
and
c) spring means (28;27,29) which act on said brake arms (16) to bias said brake shoes (20) toward each other; characterised in that said assembly (8) further comprises:
d) latching means (10) including:
i) a pair of pivotally mounted levers (42) for engagement with said brake arms (16) to hold the latter against the bias of said spring means (28;27,29); and
ii) solenoid latch actuating means (36,38) including a solenoid plunger (38) operably engaging said levers (42) to selectively hold the latter against said brake arms (16), said plunger (38) being reciprocally movable between latch-on and latch-off positions to selectively latch and release said brake arms (16).

2. The brake assembly (8) of claim 1, wherein said spring means (28;27,29) independently biases each said brake shoe (20) toward the other.

3. The brake assembly (8) of claim 1 or 2, wherein said solenoid plunger (38) operates in a direction perpendicular to the direction of bias of said spring means (28;27,29).

4. The brake assembly (8) of claim 1, 2, or 3, wherein said solenoid plunger (38) is connected to adjacent ends (48) of said levers (42) with a common connecting pin (50).

5. The brake assembly (8) of claim 4, wherein said adjacent ends (48) of said levers (42) are overlapped.

6. The brake assembly (8) of any of claims 1 to 5, wherein said solenoid plunger (38) can be removed from an associated solenoid coil (36) for cleaning upon disengagement from said levers (42).

7. The brake assembly (8) of any of claims 1 to 6, further comprising contact means for providing operating contact between said brake arms (16) and said levers (42), said contact means comprising contact pins (34) slideably mounted on ends of said brake arms (16) distal of said brake shoes (20), and arranged for engagement with said levers (42), and means (19,21) for adjustably moving said contact pins (34) toward and away from said levers (42) to modify the positioning of said levers (42).

8. The brake assembly (8) of claim 7, wherein said contact pins (34) are provided with rounded ends engaging said levers (42) for providing point contact between said brake arms (16) and levers (42).

## Claims (Claims for the following Contracting State(s): GB)

1. A caliper brake assembly (8) comprising:
a) a pair of brake shoes (20) mounted on an associated pair of brake arms (16), said brake shoes (20) having opposed braking surfaces (26); and
b) a brake disk (4) interposed between said brake shoes (20), said brake disk (4) having opposite side surfaces facing respective ones of said braking surfaces (26); characterised in that said assembly (8) further comprises:
c) spring means (28;27,29) mounted between said brake arms which act on said brake arms (16) to bias said brake shoes (20) toward each other; and
d) latching means (10) including:
i) a pair of pivotally mounted levers (42) for engagement with said brake arms (16) to hold the latter against the bias of said spring means (28;27,29); and
ii) solenoid latch actuating means (36,38) including a solenoid plunger (38) operably engaging said levers (42) to selectively hold the latter against said brake arms (16), said plunger (38) being reciprocally movable between latch-on and latch-off positions to selectively latch and release said brake arms (16).

2. The brake assembly (8) of claim 1, wherein said spring means (28;27,29) independently biases each said brake shoe (20) toward the other.

3. The brake assembly (8) of claim 1 or 2, wherein said spring means (27,29) comprises a pair of springs.

4. The brake assembly (8) of claim 1, 2 or 3, wherein said solenoid plunger (38) operates in a direction perpendicular to the direction of bias of said spring means (28;27,29).

5. The brake assembly (8) of any preceding claim, wherein said solenoid plunger (38) is connected to adjacent ends (48) of said levers (42) with a common connecting pin (50).

6. The brake assembly (8) of claim 5, wherein said adjacent ends (48) of said levers (42) are overlapped.

7. The brake assembly (8) of any preceding claim, wherein said solenoid plunger (38) can be removed from an associated solenoid coil (36) for cleaning upon disengagement from said levers (42).

8. The brake assembly (8) of any preceding claim, further comprising contact means for providing operating contact between said brake arms (16) and said levers (42), said contact means comprising contact pins (34) slideably mounted on ends of said brake arms (16) distal of said brake shoes (20), and arranged for engagement with said levers (42), and means (19,21) for adjustably moving said contact pins (34) toward and away from said levers (42) to modify the positioning of said levers (42).

9. The brake assembly (8) of claim 8, wherein said contact pins (34) are provided with rounded ends engaging said levers (42) for providing point contact between said brake arms (16) and levers (42).

## Patentansprüche (Patentansprüche für folgende(n) Vertragsstaat(en): DE, ES, FR, IT)

1. Zangenbremsvorrichtung (8), aufweisend:
a) ein Paar Bremsschuhe (20), die an einem zugehörigen Paar von Bremsarmen (16) angebracht sind, wobei die Bremsschuhe (20) einander gegenüberliegende Bremsflächen (26) haben;
b) eine Bremsscheibe (4), die zwischen den Bremsschuhen (20) angeordnet ist und die entgegengesetzte Seitenflächen hat, die jeweils einer der Bremsflächen (26) zugewandt sind;
c) und eine Federeinrichtung (28; 27, 29), die auf die Bremsarme (16) wirkt, um die Bremsschuhe (20) in Richtung aufeinander zu vorzuspannen;
dadurch gekennzeichnet,
daß die Vorrichtung (8) außerdem aufweist:
d) eine Halteeinrichtung (10), aufweisend:
i) ein Paar von schwenkbar angebrachten Hebeln (42) zum Zusammenwirken mit den Bremsarmen (16), um letztere entgegen die Vorspannung der Federeinrichtung (28; 27, 29) zu halten; und
ii) eine Solenoid-Betätigungseinrichtung (36; 38) für die Halteeinrichtung, die einen Solenoidtauchkern (38) aufweist, der arbeitsfähig mit den Hebeln (42) zusammenwirkt, um letztere wahlweise gegen die Bremsarme (16) zu halten, und zwischen einer "halten ein"- und einer "halten aus"-Position hin- und herbewegbar ist, um die Bremsarme (16) wahlweise zu halten und freizugeben.

2. Bremsvorrichtung (8) nach Anspruch 1, bei der die Federeinrichtung (28; 27, 29) unabhängig jeden Bremsschuh (20) in Richtung auf den anderen vorspannt.

3. Bremsvorrichtung (8) nach Anspruch 1 oder 2, bei der der Solenoidtauchkern (38) in eine Richtung rechtwinklig zu der Vorspannrichtung der Federeinrichtung (28; 27, 29) arbeitet.

4. Bremsvorrichtung (8) nach Anspruch 1, 2 oder 3, bei der der Solenoidtauchkern (38) mit benachbarten Enden (48) der Hebel (42) mit einem gemeinsamen Verbindungsstift (50) verbunden ist.

5. Bremsvorrichtung (8) nach Anspruch 4, bei der sich die benachbarten Enden (48) der Hebel (42) überlappen.

6. Bremsvorrichtung (8) nach einem der Ansprüche 1 bis 5, bei der der Solenoidtauchkern (38) aus einer zugehörigen Solenoidspule (36) nach Lösen von den Hebeln (42) zum Reinigen herausgenommen werden kann.

7. Bremsvorrichtung (8) nach einem der Ansprüche 1 bis 6, außerdem aufweisend eine Kontakteinrichtung zum Schaffen von betriebsmäßigem Kontakt zwischen den Bremsarmen (16) und den Hebeln (42), wobei die Kontakteinrichtung Kontaktstifte (34) aufweist, die an den Enden der Bremsarme (16), die von den Bremsschuhen (20) entfernt sind, verschiebbar angeordnet sind und zum Eingriff mit den Hebeln (42) angeordnet sind, und außerdem aufweisend eine Einrichtung (19, 21) zum Verstellbewegen der Kontaktstifte (34) in Richtung auf die Hebel (42) und von diesen weg, um die Positionierung der Hebel (42) zu verändern.

8. Bremsvorrichtung (8) nach Anspruch 7, bei der die Kontaktstifte (34) mit abgerundeten Enden versehen sind, die mit den Hebeln (42) zusammenwirken, um einen Punktkontakt zwischen den Bremsarmen (16) und den Hebeln (42) zu schaffen.

## Patentansprüche (Patentansprüche für folgende(n) Vertragsstaat(en): GB)

1. Zangenbremsvorrichtung (8), aufweisend:
a) ein Paar Bremsschuhe (20), die an einem zugehörigen Paar von Bremsarmen (16) angebracht sind, wobei die Bremsschuhe (20) einander gegenüberliegende Bremsflächen (26) haben;
b) eine Bremsscheibe (4), die zwischen den Bremsschuhen (20) angeordnet ist und die entgegengesetzte Seitenflächen hat, die jeweils einer der Bremsflächen (26) zugewandt sind;
dadurch gekennzeichnet,
daß die Vorrichtung (8) außerdem aufweist:
c) eine Federeinrichtung (28; 27, 29), die zwischen den Bremsarmen angebracht ist und auf die Bremsarme (16) wirkt, um die Bremsschuhe (20) in Richtung aufeinander zu vorzuspannen; und
d) eine Halteeinrichtung (10), aufweisend:
i) ein Paar von schwenkbar angebrachten Hebeln (42) zum Zusammenwirken mit den Bremsarmen (16), um letztere entgegen die Vorspannung der Federeinrichtung (28; 27, 29) zu halten; und
ii) eine Solenoid-Betätigungseinrichtung (36; 38) für die Halteeinrichtung, die einen Solenoidtauchkern (38) aufweist, der arbeitsfähig mit den Hebeln (42) zusammenwirkt, um letztere wahlweise gegen die Bremsarme (16) zu halten, und zwischen einer "halten ein"- und einer "halten aus"-Position hin- und herbewegbar ist, um die Bremsarme (16) wahlweise zu halten und freizugeben.

2. Bremsvorrichtung (8) nach Anspruch 1, bei der die Federeinrichtung (28; 27, 29) unabhängig jeden Bremsschuh (20) in Richtung auf den anderen vorspannt.

3. Bremsvorrichtung nach Anspruch 1 oder 2, bei der die Federeinrichtung (27, 29) ein Paar von Federn aufweist.

4. Bremsvorrichtung (8) nach Anspruch 1, 2 oder 3, bei der der Solenoidtauchkern (38) in eine Richtung rechtwinklig zu der Vorspannrichtung der Federeinrichtung (28; 27, 29) arbeitet.

5. Bremsvorrichtung (8) nach einem der vorhergehenden Ansprüche, bei der der Solenoidtauchkern (38) mit benachbarten Enden (48) der Hebel (42) mit einem gemeinsamen Verbindungsstift (50) verbunden ist.

6. Bremsvorrichtung (8) nach Anspruch 5, bei der sich die benachbarten Enden (48) der Hebel (42) überlappen.

7. Bremsvorrichtung (8) nach einem der vorhergehenden Ansprüche, bei der der Solenoidtauchkern (38) aus einer zugehörigen Solenoidspule (36) nach Lösen von den Hebeln (42) zum Reinigen herausgenommen werden kann.

8. Bremsvorrichtung (8) nach einem der vorhergehenden Ansprüche, außerdem aufweisend eine Kontakteinrichtung zum Schaffen von betriebsmäßigem Kontakt zwischen den Bremsarmen (16) und den Hebeln (42), wobei die Kontakteinrichtung Kontaktstifte (34) aufweist, die an den Enden der Bremsarme (16), die von den Bremsschuhen (20) entfernt sind, verschiebbar angeordnet sind und zum Eingriff mit den Hebeln (42) angeordnet sind, und außerdem aufweisend eine Einrichtung (19, 21) zum Verstellbewegen der Kontaktstifte (34) in Richtung auf die Hebel (42) und von diesen weg, um die Positionierung der Hebel (42) zu verändern.

9. Bremsvorrichtung (8) nach Anspruch 8, bei der die Kontaktstifte (34) mit abgerundeten Enden versehen sind, die mit den Hebeln (42) zusammenwirken, um einen Punktkontakt zwischen den Bremsarmen (16) und den Hebeln (42) zu schaffen.

## Revendications (Revendications pour l'(les) Etat(s) contractant(s) suivant(s): DE, ES, FR, IT)

1. Ensemble de freinage à étrier (8) comprenant :
a) deux patins de frein (20) montés sur deux bras de frein associés (16), lesdits patins de frein (20) ayant des surfaces de freinage opposées (26) ;
b) un disque de frein (4) interposé entre lesdits patins de frein (20), ledit disque de frein (4) ayant des surfaces latérales opposées faisant face aux surfaces respectives desdites surfaces de freinage (26) ;
c) et un moyen formant ressort (28 ; 27, 29) qui agit sur lesdits bras de frein (16) pour pousser lesdits patins de frein (20) l'un vers l'autre ;
caractérisé en ce que ledit ensemble (8) comprend de plus :
d) un moyen de verrouillage (10) comprenant :
i) deux leviers montés pivotants (42) destinés à coopérer avec lesdits bras de frein (16) pour maintenir ces derniers à l'encontre de la poussée dudit moyen formant ressort (28 ; 27, 29) ; et
ii) un moyen de commande de verrouillage à solénoïde (36, 38) comprenant un noyau plongeur (38) coopérant de façon fonctionnelle avec lesdits leviers (42) de manière à maintenir sélectivement ces derniers contre lesdits bras de frein (16), ledit noyau plongeur (38) étant mobile en un mouvement de va-et-vient entre des positions de verrouillage et de déverrouillage pour verrouiller et relâcher sélectivement lesdits bras de frein (16).

2. Ensemble de freinage (8) selon la revendication 1, dans lequel ledit moyen formant ressort (28 ; 27, 29) pousse indépendamment chacun desdits patins de frein (20) vers l'autre.

3. Ensemble de freinage (8) selon la revendication 1 ou 2, dans lequel ledit noyau plongeur (38) fonctionne dans une direction perpendiculaire à la direction de poussée dudit moyen formant ressort (28 ; 27, 29).

4. Ensemble de freinage (8) selon la revendication 1, 2 ou 3, dans lequel ledit noyau plongeur (38) est relié aux extrémités adjacentes (48) desdits leviers (42) avec un axe de liaison commun (50).

5. Ensemble de freinage (8) selon la revendication 4, dans lequel lesdites extrémités adjacentes (48) desdits leviers (42) se chevauchent.

6. Ensemble de freinage (8) selon l'une quelconque des revendications 1 à 5, dans lequel ledit noyau plongeur (38) peut être enlevé d'une bobine de solénoïde associée (36) pour être nettoyé en le détachant desdits leviers (42).

7. Ensemble de freinage (8) selon l'une quelconque des revendications 1 à 6, comprenant de plus des moyens de contact pour réaliser un contact de fonctionnement entre lesdits bras de frein (16) et lesdits leviers (42), lesdits moyens de contact comprenant des ergots de contact (34) montés coulissants sur les extrémités desdits bras de frein (16) distantes desdits patins de frein (20), et agencés pour coopérer avec lesdits leviers (42), et des moyens (19, 21) pour approcher et éloigner de manière ajustable lesdits ergots de contact (34) desdits leviers (42) afin de modifier le positionnement desdits leviers (42).

8. Ensemble de freinage (8) selon la revendication 7, dans lequel lesdits ergots de contact (34) sont pourvus d'extrémités arrondies coopérant avec lesdits leviers (42) pour former un contact ponctuel entre lesdits bras de frein (16) et lesdits leviers (42).

## Revendications (Revendications pour l'(les) Etat(s) contractant(s) suivant(s): GB)

1. Ensemble de freinage à étrier (8) comprenant :
a) deux patins de frein (20) montés sur deux bras de frein associés (16), lesdits patins de frein (20) ayant des surfaces de freinage opposées (26) ; et
b) un disque de frein (4) interposé entre lesdits patins de frein (20), ledit disque de frein (4) ayant des surfaces latérales opposées faisant face aux surfaces respectives desdites surfaces de freinage (26) ; caractérisé en ce que ledit ensemble (8) comprend de plus :
c) un moyen formant ressort (28 ; 27, 29) monté entre lesdits bras de frein qui agit sur lesdits bras de frein (16) pour pousser lesdits patins de frein (20), l'un vers l'autre ;
d) un moyen de verrouillage (10) comprenant :
i) deux leviers montés pivotants (42) destinés à coopérer avec lesdits bras de frein (16) pour maintenir ces derniers à l'encontre de la poussée dudit moyen formant ressort (28 ; 27, 29) ; et
ii) un moyen de commande de verrouillage à solénoïde (36, 38) comprenant un noyau plongeur (38) coopérant de façon fonctionnelle avec lesdits leviers (42) de manière à maintenir sélectivement ces derniers contre lesdits bras de frein (16), ledit noyau plongeur (38) étant mobile en un mouvement de va-et-vient entre des positions de verrouillage et de déverrouillage pour verrouiller et relâcher sélectivement lesdits bras de frein (16).

2. Ensemble de freinage (8) selon la revendication 1, dans lequel ledit moyen formant ressort (28 ; 27, 29) pousse indépendamment chacun desdits patins de frein (20) vers l'autre.

3. Ensemble de freinage (8) selon la revendication 1 ou 2, dans lequel ledit moyen formant ressort (27, 29) comprend deux ressorts.

4. Ensemble de freinage (8) selon la revendication 1, 2 ou 3, dans lequel ledit noyau plongeur (38) fonctionne dans une direction perpendiculaire à la direction de poussée dudit moyen formant ressort (28 ; 27, 29).

5. Ensemble de freinage (8) selon la revendication 1, 2, 3 ou 4, dans lequel ledit noyau plongeur (38) est relié aux extrémités adjacentes (48) desdits leviers (42) avec un axe de liaison commun (50).

6. Ensemble de freinage (8) selon la revendication 5, dans lequel lesdites extrémités adjacentes (48) desdits leviers (42) se chevauchent.

7. Ensemble de freinage (8) selon l'une quelconque des revendications 1 à 6, dans lequel ledit noyau plongeur (38) peut être enlevé d'une bobine de solénoïde associée (36) pour être nettoyé en le détachant desdits leviers (42).

8. Ensemble de freinage (8) selon l'une quelconque des revendications 1 à 7, comprenant de plus des moyens de contact pour réaliser un contact de fontionnement entre lesdits bras de frein (16) et lesdits leviers (42), lesdits moyens de contact comprenant des ergots de contact (34) montés coulissants sur les extrémetés desdits bras de frein (16) distantes desdits patins de frein (20), et agencés pour coopérer avec lesdits leviers (42), et des moyens (19, 21) pour approcher et éloigner de manière adjustable desdits ergots de contact (34) desdits leviers (42) afin de modifier le positionnement desdits leviers (42).

9. Ensemble de freinage (8) selon la revendication 8, dans lequel lesdits ergots de contact (34) sont pourvus d'extrémités arrondies coopérant avec lesdits leviers (42) pour former un contact ponctuel entre lesdits bras de frein (16) et lesdits leviers (42).
